# EUROPÄISCHE PATENTANMELDUNG

(11) **EP 4 601 142 A1**
(43) Veröffentlichungstag der Anmeldung: **13.08.2025**
(21) Anmeldenummer: 24156092.9
(22) Anmeldetag: 06.02.2024
(51) Int. Cl.: H02J 1/08, B60L 3/00

(54) **BATTERIEMODUL**

(71) Anmelder: HOPPECKE Systemtechnik GmbH, 08056 Zwickau (DE)
(72) Erfinder: Ehlert, Andreas, 08066 Zwickau (DE); Rahmann, Finn, 33100 Paderborn (DE); Reinhold, Stefan, 08058 Zwickau (DE)
(74) Vertreter: Brinkmann & Partner

(57) **Zusammenfassung**

Die Erfindung betrifft ein Batteriemodul zur Speisung eines Bordnetzes eines Zugs, mit einer Batterie (3), insbesondere einer Lithium-Ionen-Batterie, und einer Schaltelektronik (4), wobei die Schaltelektronik (4) einen Hochleistungspfad (5) zur Speisung des Bordnetzes (6) auf Basis einer ersten Bordspannung (7) und einen Hilfspfad (8) zur Speisung des Bordnetzes (6) auf Basis einer zweiten Bordspannung (9) aufweist, wobei der Hochleistungspfad (5) einen ersten Strang (10) mit einem ersten Schaltelement (12) und einen zweiten Strang (11) mit einem zweiten Schaltelement (13) aufweist, wobei der Hilfspfad (8) einen ersten Strang (16) mit einem dritten Schaltelement (18) und einen zweiten Strang (17) aufweist, wobei der erste Strang (16) des Hilfspfads (8) dem ersten Schaltelement (12) vorgeschaltet an den ersten Strang (10) des Hochleistungspfads (5) angeschlossen ist und wobei der zweite Strang (17) des Hilfspfads (8) dem zweiten Schaltelement (13) nachgeschaltet an den zweiten Strang (11) des Hochleistungspfads (5) angeschlossen ist.

## Beschreibung

Die Erfindung betrifft ein Batteriemodul zur Speisung eines Bordnetzes eines Zugs, mit einer Batterie, insbesondere einer Lithium-Ionen-Batterie, und einer Schaltelektronik.

Batteriemodule der eingangs genannten Art sind aus dem Stand der Technik an sich gut bekannt, weshalb es eines gesonderten druckschriftlichen Nachweises nicht bedarf.

Nach dem Stand der Technik verfügt ein Zug über zwei Bordspannungssysteme. Ein zweites Spannungssystem dient insbesondere der Versorgung von zugseitigen Computersystemen und/oder einer Zugsteuerung. Ein erstes Spannungssystem versorgt alle übrigen Systeme des Zuges und ermöglicht eine Fortbewegung des Zuges auch ohne eine externe Stromversorgung, beispielsweise auf nicht elektrifizierten Strecken oder im Notfall.

Nach dem Stand der Technik sind zur Spannungsversorgung der beiden Bordspannungssysteme zwei voneinander getrennte Batteriemodule vorgesehen, d.h. ein erstes Batteriemodul für das erste Bordspannungssystem und ein zweites Batteriemodul für das zweite Bordspannungssystem.

Obgleich sich die vorbeschriebene Ausgestaltung im alltäglichen Praxiseinsatz bewährt hat, besteht Verbesserungsbedarf, insbesondere hinsichtlich einer Kosten- und Platzbedarfoptimierung. Es ist deshalb die **Aufgabe** der Erfindung, ein Batteriemodul der eingangs genannten Art konstruktiv dahingehend weiterzuentwickeln, dass bei gleichzeitiger Kosten- und Platzbedarfoptimierung eine sichere Versorgung der beiden Bordspannungssysteme eines Zugs gewährleistet ist.

Zur **Lösung** dieser Aufgabe wird mit der Erfindung vorgeschlagen ein Batteriemodul zur Speisung eines Bordnetzes eines Zugs, mit einer Batterie, insbesondere einer Lithium-Ionen-Batterie, und einer Schaltelektronik, wobei die Schaltelektronik einen Hochleistungspfad zur Speisung des Bordnetzes auf Basis einer ersten Bordspannung und einen Hilfspfad zur Speisung des Bordnetzes auf Basis einer zweiten Bordspannung aufweist, wobei der Hochleistungspfad einen ersten Strang mit einem ersten Schaltelement und einen zweiten Strang mit einem zweiten Schaltelement aufweist, wobei der Hilfspfad einen ersten Strang mit einem dritten Schaltelement und einen zweiten Strang aufweist, wobei der erste Strang des Hilfspfads dem ersten Schaltelement vorgeschaltet an den ersten Strang des Hochleistungspfads angeschlossen ist und wobei der zweite Strang des Hilfspfads dem zweiten Schaltelement nachgeschaltet an den zweiten Strang des Hochleistungspfads angeschlossen ist.

Die Schaltelektronik des erfindungsgemäßen Batteriemoduls weist einen Hochleistungspfad einerseits und einen Hilfspfad andererseits auf. Dabei dient der Hochleistungspfad zur Speisung des Bordnetzes des Zuges auf Basis einer ersten Bordspannung von z.B. bis zu 1000V. Der Hilfspfad dient indes einer Speisung des Bordnetzes des Zuges auf Basis einer zweiten Bordspannung von z.B. 24V.

Die zweite Bordspannung kann beispielsweise der Versorgung von Computersystemen und/oder einer Steuerung des Zuges dienen. Mittels der ersten Bordspannung werden indes alle übrigen Systeme des Zuges versorgt, insbesondere auch ein Antriebssystem des Zuges zwecks einer Fortbewegung ohne externe Stromversorgung.

Der Hochleistungspfad verfügt über zwei schaltbare Stränge, wobei ein erster Strang mit einem ersten Schaltelement und ein zweiter Strang mit einem zweiten Schaltelement vorgesehen sind. Auch der Hilfspfad verfügt über zwei Stränge, wobei nur einer der beiden Stränge schaltbar ist. Dementsprechend ist ein Hilfspfad vorgesehen, der einen ersten Strang mit einem dritten Schaltelement und einen schaltelementfreien zweiten Strang aufweist.

Erfindungsgemäß ist des Weiteren vorgesehen, dass der erste Strang des Hilfspfads dem ersten Schaltelement vorgeschaltet an den ersten Strang des Hochleistungspfads angeschlossen ist. Der zweite Strang des Hilfspfads ist dem zweiten Schaltelement nachgeschaltet und dem zweiten Strang des Hochleistungspfads angeschlossen.

Die vorbeschriebene Verschaltung ermöglicht es, dass mit nur einer einzigen Batterie und damit auch mit nur einem einzigen Batteriemodul die beiden Bordspannungssysteme des Zuges bestimmungsgemäß gespeist werden können, und zwar auf Basis einer ersten Bordspannung sowie auf Basis einer zweiten Bordspannung. Im Unterschied zum Stand der Technik kann mithin das danach zwingend vorgesehene zweite Batteriemodul vollends entfallen, was sowohl aus Kostengründen als auch aus Platzbedarfsgründen von Vorteil ist. Insbesondere erweist sich die erfindungsgemäße Ausgestaltung als weniger kostenintensiv. Zudem benötigt sie für eine bestimmungsgemäße Verwendung weniger Bauraum, was auch eine Montage bzw. Demontage vereinfacht.

Des Weiteren ist von Vorteil, dass eine Bordspannungsversorgung auf Basis einer zweiten Bordspannung von z. B. 24 V stattfinden kann, und dies unabhängig von einer Leistungsversorgung über den Hochleistungspfad. Insbesondere im Falle einer Notsituation kann mithin mit ein und demselben Batteriemodul eine Spannungsversorgung als Hilfsversorgung über den Hilfspfad stattfinden, während eine Spannungsversorgung über den Hochleistungspfad abgeschaltet ist. Es kann so selbst im Notfallbetrieb des Zuges bei ansonsten abgeschalteten Zugsystemen eine Spannungsversorgung für das zugseitige Computersystem bzw. die Steuerung des Zuges sicher aufrecht erhalten werden. Gleichwohl sind im Unterschied zum Stand der Technik nicht zwei Batterien bzw. zwei Batteriemodule von Nöten. Es ist allein erforderlich, dass die eine nach der Erfindung eingesetzte Batterie über eine hinreichende Kapazität verfügt, beispielsweise eine Kapazität, die einen 90-minütigen Notstrombetrieb gewährleistet.

Gemäß einem weiteren Merkmal der Erfindung ist vorgesehen, dass die Schaltelektronik einen Gleichspannungswandler aufweist. Dieser Gleichspannungswandler dient dazu, wahlweise die beiden Bordspannungen bereitstellen zu können. Dabei dient die über den Hilfspfad eingespeiste Bordspannung insbesondere dazu, die Steuerung des Zuges mit Energie zu versorgen, zu welchem Zweck vorgesehen ist, dass der Gleichspannungswandler eine zweite Bordspannung von z. B. 24 V bereitstellt. Der Hochleistungspfad dient indes einer Speisung des Bordnetzes auf Basis einer ersten Bordspannung, die insbesondere für eine bestimmungsgemäße Stromversorgung der Antriebssysteme des Zuges ausgelegt ist.

Gemäß einem weiteren Merkmal der Erfindung ist vorgesehen, dass der Gleichspannungswandler dazu eingerichtet ist, die Batterie, insbesondere die Lithiumlonen-Batterie, ohne externe Stromversorgung aufzustarten. Zu diesem Zweck kann beispielsweise ein viertes Schaltelement vorgesehen sein. Durch dessen Betätigung wird über den Gleichspannungswandler eine Stromversorgung insbesondere einer Zugsteuerung angefordert. Sobald die Zugsteuerung bzw. die zugseitigen Computersysteme hochgefahren sind bzw. bestimmungsgemäß arbeiten, können die Antriebssysteme des Zuges gestartet werden, infolge dessen eine Versorgung des Bordnetzes auf Basis der ersten Bordspannung erfolgt.

Mit der Erfindung wird ferner ein Verfahren zum Betrieb eines Batteriemoduls vorgeschlagen, insbesondere eines Batteriemoduls der vorbeschriebenen Art, bei dem eine Spannungsversorgung eines zugseitigen Bordnetzes durch einen Betätigung eines mit dem Gleichspannungswandler zusammenwirkenden vierten Schaltelements angefordert wird, bei dem im Falle einer fehlerfreien Batterie, insbesondere einer Lithium-Ionen-Batterie, das zweite Schaltelement des zweiten Strangs des Hochleistungspfads geschlossen wird und bei dem zur Speisung des Bordnetzes auf Basis der zweiten Bordspannung das dritte Schaltelement im ersten Strang des Hilfspfads geschlossen wird.

Gemäß dieser Verfahrensdurchführung ist ein Aufstarten des Zuges ohne externe Spannungsversorgung ermöglicht. Gemäß einem ersten Schritt wird eine Spannungsversorgung für die Zugsteuerung angefordert. Dies geschieht durch eine Betätigung des vierten Schaltelements. Alsdann wird die Fehlerfreiheit der Batterie überprüft bzw. festgestellt. Sobald die Fehlerfreiheit der Batterie festgestellt ist, d.h. die bestimmungsgemäße Bereitschaft der Batterie feststeht, wird das zweite Schaltelement des zweiten Strangs des Hochleistungspfads geschlossen. Sollte eine Fehlerfreiheit der Batterie nicht gegeben sein, ist eine Betätigung des zweiten Schaltelements vorzugsweise nicht möglich. In einem dritten Schritt schließt dann das dritte Schaltelement im ersten Strang des Hilfspfads, was im Ergebnis zur Speisung des Bordnetzes auf Basis der zweiten Bordspannung führt. Der Hilfspfad und damit auch die zweite Bordspannung sind mithin aktiv, so dass insbesondere ein Betrieb der zugeigenen Computersysteme gewährleistet ist. Eine Spannungsversorgung des Bordnetzes für alle übrigen Zugsysteme, insbesondere für das Antriebssystem findet indes noch nicht statt.

Bei aktiver zweiter Bordspannung ist ein Starten des Zuges zwecks Fortbewegung ermöglicht. Zu diesem Zweck ist gemäß einem weiteren Merkmal der Erfindung zur Speisung des Bordnetzes auf Basis der ersten Bordspannung das erste Schaltelement des ersten Stranges des Hochleistungspfads zu schließen. Der Zug ist nun fahrbereit, da die Leistung für die Antriebsmotoren des Antriebssystems freigeschaltet ist.

Gemäß einem weiteren Merkmal der Erfindung ist vorgesehen, dass im Falle eines zugseitigen Notaussignals das erste Schaltelement des ersten Strangs des Hochleistungspfades geöffnet wird. Es steht dann keine Leistung mehr für die Antriebsmotoren des Antriebssystems des Zuges zur Verfügung, womit eine Fortbewegung des Zuges unterbunden ist. Allerdings sind das zweite Schaltelement und das dritte Schaltelement noch geschlossen, so dass weiterhin eine bestimmungsgemäße Versorgung des Bordnetzes auf Basis der zweiten Bordspannung erfolgt. Der Notbetrieb bleibt mithin aktiv und es findet insbesondere eine Versorgung der zugeigenen Computersysteme bzw. der Zugsteuerung mit Spannung statt.

Alternativ oder im Falle eines gewünschten ungeregelten Ausschaltens im Notfall insbesondere durch Rettungskräfte wie z. B. die Feuerwehr ist vorgesehen, dass das dritte Schaltelement des ersten Stranges des Hilfspfads und/oder das zweite Schaltelement des zweiten Strangs des Hochleistungspfads geöffnet werden/wird, um den Zug spannungsfrei zu stellen. In diesem Fall ist auch der Notbetrieb nicht mehr aktiv, d.h. es ist nicht nur der Hochleistungspfad ausgeschaltet, sondern auch der Hilfspfad. Es findet mithin keinerlei Spannungsversorgung des Zuges mehr statt.

Das vorbeschriebene Batteriemodul bzw. das vorbeschriebene Verfahren bieten eine Mehrzahl von Vorteilen. Im Falle einer zugseitigen Betätigung von "Not-Aus" erfolgt eine Abschaltung des Hochleistungspfades. Der Hilfspfad wird indes nicht getrennt, so dass nach wie vor eine Speisung des Bordnetzes stattfindet, allerdings nur auf Basis der zweiten Bordspannung, womit das zugseitige Antriebsystem zwar ausgeschaltet ist, die Zugsteuerung bzw. die zugeigenen Computersysteme aber nach wie vor bestimmungsgemäß betrieben werden können.

Es ist ein Aufstarten des Hochleistungspfades auch ohne externe Spannungsversorgung möglich, und zwar über den Spannungswandler Es werden mithin zunächst die Computersysteme bzw. die Zugsteuerung mittels der zweiten Bordspannung hochgefahren, so dass der Zug in einen startbereiten Zustand versetzt wird, bevor dann das eigentliche Antriebssystem des Zuges mit der entsprechenden Bordspannung versorgt wird.

Es ist darüber hinaus die Bereitstellung einer Bordspannungsversorgung auf Basis von 24V Gleichspannung möglich, und zwar unabhängig zur Leistungsversorgung über den Hochleistungspfad. Dies ist in erfindungsgemäßer Weise trotz fehlender zweiter Batterie möglich.

Batteriezustände, wie z.B. der Ladezustand und die Temperatur können permanent überwacht werden, was ein Abschalten der Batterie im Falle eines kritischen Batteriezustands ermöglicht. Es ist in diesem Zusammenhang ferner ermöglicht, das zweite Schaltelement zur Versorgung des Hochleistungspfades mit Spannung erst dann zu schließen, wenn im Vorfeld ein fehlerfreier Betrieb der Lithium-Ionen-Batterie festgestellt werden konnte.

Des Weiteren ist von Vorteil, dass das gesamte System einen nur geringen Strombedarf im Stand-By-Betrieb der Steuerung benötigt.

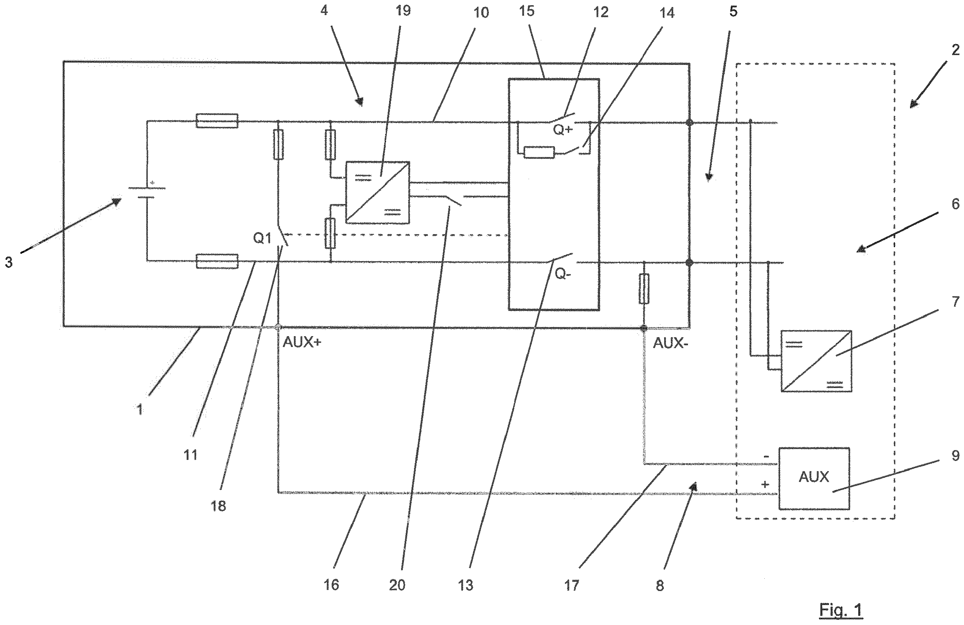

Weitere Merkmale und Vorteile der Erfindung ergeben sich aus der nachfolgenden Beschreibung anhand der einzigen Figur 1, die in einem Prinzipschaltbild die erfindungsgemäße Ausgestaltung zeigt.

Wie die Darstellung nach Fig. 1 erkennen lässt, verfügt das erfindungsgemäße Batteriemodul 1 über eine Batterie 3 sowie über eine Schaltelektronik 4. Bei der Batterie 3 handelt es sich vorzugsweise um eine Lithium-Ionen-Batterie, die im gezeigten Ausführungsbeispiel der Speisung eines Bordnetzes 6 eines Zuges 2 dient.

Die Schaltelektronik 4 verfügt über einen Hochleistungspfad 5 einerseits und einen Hilfspfad 8 andererseits. Dabei dient der Hochleistungspfad 5 der Speisung des Bordnetzes 6 auf Basis einer ersten Bordspannung 7, wohingegen der Hilfspfad 8 zur Speisung des Bordnetzes 6 auf Basis einer zweiten Bordspannung 9 dient.

Der Hochleistungspfad 5 weist einen ersten Strang 10 mit einem ersten Schaltelement 12 und einen zweiten Strang 11 mit einem zweiten Schaltelement 13 auf. Das erste Schaltelement 12 und das zweite Schaltelement 13 sind Bestandteile eines Strangmoduls 15. Dieses Strangmodul 15 weist ferner eine Vorladung 14 auf, die zum ersten Schaltelement 12 parallelgeschaltet ist.

Der Hilfspfad 8 weist einen ersten Strang 16 mit einem dritten Schaltelement 18 sowie einen zweiten Strang 17 auf, wobei der zweite Strang 17 schaltelementfrei ausgebildet ist.

Der zweite Strang des Hilfspfads 8 ist in Reihe mit dem zweiten Schaltelement 13 des zweiten Strangs 11 des Hochleistungspfades 5 geschaltet, d.h. der zweite Strang 17 des Hilfspfads 8 ist dem zweiten Schaltelement 13 nachgeschaltet an den zweiten Strang 11 des Hochleistungspfades 5 angeschlossen.

Der erste Strang 16 des Hilfspfads 8 ist indes dem ersten Schaltelement 12 vorgeschaltet an den ersten Strang 10 des Hochleistungspfads 5 angeschlossen.

Die Schaltelektronik 4 verfügt des Weiteren über einen Gleichspannungswandler 19, der mit einem vierten Schaltelement 20 zusammenwirkt.

Wie die Prinzipdarstellung nach Fig. 1 erkennen lässt, ist nur eine Batterie 3 vorgesehen, die gleichermaßen dazu dient, das Bordnetz 6 des Zuges 2 wahlweise mit einer ersten Bordspannung 7 oder einer zweiten Bordspannung 9 zu versorgen.

Die vorbeschriebene Schaltelektronik 4 ermöglicht im Übrigen eine Verfahrensabwicklung wie folgt.

Es ist ein Aufstarten des Zuges 2 ohne externe Spannungsversorgung ermöglicht. Zu diesem Zweck ist das vierte Schaltelement 20 zu betätigen, womit eine Spannungsversorgung für eine zugseitige Steuerung angefordert wird. Das zweite Schaltelement 13 des Strangmoduls 15 schließt im Falle einer fehlerfreien Batterie 3. Alsdann wird das beispielsweise als Schütz ausgebildete dritte Schaltelement 18 geschlossen, so dass eine Spannungsversorgung über den Hilfspfad 8 auf Basis der zweiten Bordspannung 9 erfolgt. Der Hilfspfad ist mithin aktiv, so dass im Weiteren ein Starten des Zuges 2 erfolgen kann.

Um den Zug 2 zu starten, ist alsdann das erste Schaltelement 12 des Strangmoduls 15 zu schließen. Infolge dessen ist der Hochleistungspfad 5 aktiv und der Zug 2 ist fahrbereit, da die für einen Antrieb der Antriebsmotoren benötigte Leistung freigeschaltet ist.

Im Falle eines zugseitigen Notaus, wenn also vom Zug ein Notaussignal ausgeht, wird die Leistungsanforderung mit Bezug auf den Hochleistungspfad 5 abgeschaltet. Zu diesem Zweck wird das erste Schaltelement 12 des Strangmoduls 15 geöffnet. Dem Zug 2 steht damit keine Leistung für die Antriebsmotoren bereit. Die beiden Schaltelemente 13 und 18 bleiben indes noch geschlossen, womit der Hilfspfad 8 weiterhin aktiv bleibt, was einen Notbetrieb ermöglicht.

Ein optionaler Notaus bzw. ein ungeregeltes Ausschalten im Notfall insbesondere durch Hilfskräfte ist durch ein Schalten der Schaltelemente 13 und 18 ermöglicht. Der Zug 2 wird in diesem Fall komplett spannungsfrei gestellt.

### Bezugszeichen

- 1: Batteriemodul
- 2: Zug
- 3: Batterie
- 4: Schaltelektronik
- 5: Hochleistungspfad
- 6: Bordnetz
- 7: erste Bordspannung
- 8: Hilfspfad
- 9: zweite Bordspannung
- 10: erster Strang Hochleistungspfad
- 11: zweiter Strang Hochleistungspfad
- 12: erstes Schaltelement
- 13: zweites Schaltelement
- 14: Vorladung
- 15: Strangmodul
- 16: erster Strang Hilfspfad
- 17: zweiter Strang Hilfspfad
- 18: drittes Schaltelement
- 19: Gleichspannungswandler
- 20: viertes Schaltelement

## Patentansprüche

1. Batteriemodul zur Speisung eines Bordnetzes eines Zugs, mit einer Batterie (3), insbesondere einer Lithium-Ionen-Batterie, und einer Schaltelektronik (4), wobei die Schaltelektronik (4) einen Hochleistungspfad (5) zur Speisung des Bordnetzes (6) auf Basis einer ersten Bordspannung (7) und einen Hilfspfad (8) zur Speisung des Bordnetzes (6) auf Basis einer zweiten Bordspannung (9) aufweist, wobei der Hochleistungspfad (5) einen ersten Strang (10) mit einem ersten Schaltelement (12) und einen zweiten Strang (11) mit einem zweiten Schaltelement (13) aufweist, wobei der Hilfspfad (8) einen ersten Strang (16) mit einem dritten Schaltelement (18) und einen zweiten Strang (17) aufweist, wobei der erste Strang (16) des Hilfspfads (8) dem ersten Schaltelement (12) vorgeschaltet an den ersten Strang (10) des Hochleistungspfads (5) angeschlossen ist und wobei der zweite Strang (17) des Hilfspfads (8) dem zweiten Schaltelement (13) nachgeschaltet an den zweiten Strang (11) des Hochleistungspfads (5) angeschlossen ist.

2. Batteriemodul nach Anspruch 1, **dadurch gekennzeichnet, dass** die Schaltelektronik (4) einen Gleichspannungswandler (19) aufweist.

3. Batteriemodul nach Anspruch 2, **dadurch gekennzeichnet, dass** der Gleichspannungswandler (19) eine zweite Bordspannung (9) von 24 V bereitstellt.

4. Batteriemodul nach Anspruch 2 oder 3, **dadurch gekennzeichnet, dass** der Gleichspannungswandler (19) dazu eingerichtet ist, die Batterie (3) ohne externe Stromversorgung aufzustarten.

5. Verfahren zum Betrieb eines Batteriemoduls nach einem der vorhergehenden Ansprüche,
- bei dem eine Spannungsversorgung eines zugseitigen Bordnetzes (6) durch eine Betätigung eines mit dem Gleichspannungswandler (19) zusammenwirkenden vierten Schaltelements (20) angefordert wird,
- bei dem im Falle einer fehlerfreien Batterie (3) das zweite Schaltelement (13) des zweiten Strangs (11) des Hochleistungspfades (5) geschlossen wird und
- bei dem zur Speisung des Bordnetzes (6) auf Basis der zweiten Bordspannung (9) das dritte Schaltelement (18) im ersten Strang (16) des Hilfspfads (8) geschlossen wird.

6. Verfahren nach Anspruch 5, bei dem zur Speisung des Bordnetzes (6) auf Basis der ersten Bordspannung (7) das erste Schaltelement (12) des ersten Strangs (10) des Hochleistungspfads (5) geschlossen wird.

7. Verfahren nach Anspruch 6, bei dem im Falle eines zugseitigen Notaussignals das erste Schaltelement (12) des ersten Strangs (10) des Hochleistungspfads (5) geöffnet wird.

8. Verfahren nach einem der vorhergehenden Ansprüche 5, 6 oder 7, bei dem das dritte Schaltelement (18) des ersten Strangs (16) des Hilfspfads (8) und/oder das zweite Schaltelement (13) des zweiten Strangs (11) des Hochleistungspfads (5) geöffnet werden/wird, um den Zug (2) spannungsfrei zu stellen.

## Geänderte Patentansprüche

### Geänderte Patentansprüche gemäss Regel 137(2) EPÜ.

1. Batteriemodul zur Speisung eines Bordnetzes eines Zugs, mit einer Batterie (3), insbesondere einer Lithium-Ionen-Batterie, und einer Schaltelektronik (4), wobei die Schaltelektronik (4) einen Hochleistungspfad (5) zur Speisung des Bordnetzes (6) auf Basis einer ersten Bordspannung (7) und einen Hilfspfad (8) zur Speisung des Bordnetzes (6) auf Basis einer zweiten Bordspannung (9) aufweist, wobei der Hochleistungspfad (5) einen ersten Strang (10) mit einem ersten Schaltelement (12) und einen zweiten Strang (11) mit einem zweiten Schaltelement (13) aufweist, wobei der Hilfspfad (8) einen ersten Strang (16) mit einem dritten Schaltelement (18) und einen zweiten Strang (17) aufweist, wobei der erste Strang (16) des Hilfspfads (8) dem ersten Schaltelement (12) vorgeschaltet an den ersten Strang (10) des Hochleistungspfads (5) angeschlossen ist und wobei der zweite Strang (17) des Hilfspfads (8) dem zweiten Schaltelement (13) nachgeschaltet an den zweiten Strang (11) des Hochleistungspfads (5) angeschlossen ist, **dadurch gekennzeichnet, dass** die Schaltelektronik (4) einen Gleichspannungswandler (19) aufweist, wobei der Gleichspannungswandler (19) dazu dient, wahlweise die erste Bordspannung (7) oder die zweite Bordspannung (9) bereitzustellen.

2. Batteriemodul nach Anspruch 1, **dadurch gekennzeichnet, dass** der Gleichspannungswandler (19) eine zweite Bordspannung (9) von 24 V bereitstellt.

3. Batteriemodul nach Anspruch 1 oder 2, **dadurch gekennzeichnet, dass** der Gleichspannungswandler (19) dazu eingerichtet ist, die Batterie (3) ohne externe Stromversorgung aufzustarten.

4. Verfahren zum Betrieb eines Batteriemoduls nach einem der vorhergehenden Ansprüche,
- bei dem eine Spannungsversorgung eines zugseitigen Bordnetzes (6) durch eine Betätigung eines mit dem Gleichspannungswandler (19) zusammenwirkenden vierten Schaltelements (20) angefordert wird,
- bei dem im Falle einer fehlerfreien Batterie (3) das zweite Schaltelement (13) des zweiten Strangs (11) des Hochleistungspfades (5) geschlossen wird und
- bei dem zur Speisung des Bordnetzes (6) auf Basis der zweiten Bordspannung (9) das dritte Schaltelement (18) im ersten Strang (16) des Hilfspfads (8) geschlossen wird.

5. Verfahren nach Anspruch 4, bei dem zur Speisung des Bordnetzes (6) auf Basis der ersten Bordspannung (7) das erste Schaltelement (12) des ersten Strangs (10) des Hochleistungspfads (5) geschlossen wird.

6. Verfahren nach Anspruch 5, bei dem im Falle eines zugseitigen Notaussignals das erste Schaltelement (12) des ersten Strangs (10) des Hochleistungspfads (5) geöffnet wird.

7. Verfahren nach einem der vorhergehenden Ansprüche 4, 5 oder 6, bei dem das dritte Schaltelement (18) des ersten Strangs (16) des Hilfspfads (8) und/oder das zweite Schaltelement (13) des zweiten Strangs (11) des Hochleistungspfads (5) geöffnet werden/wird, um den Zug (2) spannungsfrei zu stellen.
